# EUROPÄISCHE PATENTANMELDUNG

(11) **EP 2 189 501 A1**
(43) Veröffentlichungstag der Anmeldung: **26.05.2010**
(21) Anmeldenummer: 08169676.7
(22) Anmeldetag: 21.11.2008
(51) Int. Cl.: C08L 83/04, C09D 183/04, C09J 183/04, C09K 3/10, C08K 5/057, C08K 5/5415, C08K 5/5419, C08K 5/57

(54) **Lagerstabile zweikomponentige Siliconkleb- und Dichtstoffe mit verlängerter Mischeroffenzeit**

(71) Anmelder: Sika Technology AG, 6340 Baar (CH)
(72) Erfinder: Djurdjevic, Alexander, 8048, Zürich (CH); Hamann, Christin, 8967, Widen (CH); Böttiger, Michael, 5454, Bellikon (CH)
(74) Vertreter: Sika Patent Attorneys

(57) **Zusammenfassung**

Gegenstand der vorliegenden Erfindung ist eine zweikomponentige Siliconzusammensetzung bestehend aus einer Komponente **A** umfassend
i) mindestens ein Hydroxylgruppen terminiertes Polydiorganosiloxan **P**;
ii) mindestens einen Katalysator **K** für die Vernetzung von Polydiorganosiloxanen;

und einer Komponente **B** umfassend
i') mindestens einen Vernetzer für Polydiorganosiloxane.

Derartige Zusammensetzungen eignen sich insbesondere als Klebstoffe, Dichtstoffe, Beschichtungen oder als Gussmassen und zeichnen sich durch eine sehr hohe Lagerstabilität aus.

## Beschreibung

### Technisches Gebiet

Die vorliegende Erfindung betrifft das Gebiet der zweikomponentigen Siliconzusammensetzungen.

### Stand der Technik

Zweikomponentige Siliconzusammensetzungen sind schon seit längerem bekannt und werden insbesondere als Kleb- und Dichtstoffe in unterschiedlichen Anwendungen eingesetzt. Weit verbreitet sind insbesondere bei Raumtemperatur vernetzende, zweikomponentige Siliconzusammensetzungen, auch bekannt als RTV-2 Silicone (RTV-2: "room temperature vulcanizing, 2-part silicones").

Eine derartige zweikomponentige Siliconzusammensetzung ist beispielsweise beschrieben in EP 0 787 766 A1. Um die Lagerstabilität der dort beschriebenen Zusammensetzung nicht zu beeinträchtigen bzw. um eine zu frühe, ungewollte Aushärtung zu verhindern, werden die Hauptbestandteile, nämlich ein α,ω-Dihydroxypolydiorganosiloxan und ein Katalysator für die Vernetzung von Polydiorganosiloxanen, in zwei separaten Komponenten aufbewahrt. Bei der Applikation einer derartigen Zusammensetzung werden dann die beiden Komponenten miteinander vermischt, worauf es zur Vernetzung bzw. zur Aushärtung der Zusammensetzung kommt.

Ein bedeutender Nachteil derartiger zweikomponentiger Siliconzusammensetzungen, wie sie in EP 0 787 766 A1 beschrieben sind, ist die so genannte Mischeroffenzeitproblematik. Diese ergibt sich vor allem, wenn die beiden Komponenten über einen Statikmischer oder dergleichen miteinander vermischt werden. Dabei kann es nämlich beim Aufeinandertreffen der beiden Komponenten beim Eintritt in den Statikmischer zu einer kurzzeitigen, lokalen Überkonzentration der Katalysator enthaltenden Komponente gegenüber der Polydiorganosiloxan enthaltenden Komponente kommen, was zur schnellen Aushärtung der Zusammensetzung im Inneren der Statikmischers führen und diesen verstopfen kann. Dies kommt insbesondere dann vor, wenn die Polydiorganosiloxan enthaltende Komponente gegenüber der Katalysator enthaltenden Komponente in einem Gewichtsverhältnis von ≥ 1:1 eingesetzt wird, was in der Praxis oft der Fall ist.

Möglichkeiten zur Behebung des beschrieben Nachteils sind beispielsweise die Verringerung der Katalysatorkonzentration in der Katalysator-Komponente, entweder durch tatsächliche Verringerung des Katalysatorgehalts oder aber durch höhere Verdünnung des Katalysators. Die Verringerung des Katalysatorgehalts führt jedoch zwangsweise zu einer Erhöhung der Aushärtungsdauer, also der Topfzeit, was meistens unerwünscht ist. Hingegen bringt es die höhere Verdünnung des Katalysators mit sich, dass zusätzliche Verdünnungsmittel eingesetzt werden müssen oder nicht reaktive Bestandteile aus der Polydiorganosiloxan enthaltenden Komponente in die Katalysator-Komponente verschoben werden müssen, was Beeinträchtigungen in der Verarbeitbarkeit und/oder in der Mechanik der ausgehärteten Zusammensetzung mit sich bringen kann und zudem die Möglichkeiten der Ausgestaltung der Zusammensetzung einschränkt.

Der Einsatz des Katalysators in der Polydiorganosiloxan enthaltenden Komponente hat sich bisher aus Gründen der Lagerstabilität der Siliconzusammensetzung als ungeeignet erwiesen.

### Darstellung der Erfindung

Aufgabe der vorliegenden Erfindung ist es daher, eine zweikomponentige Siliconzusammensetzung bereitzustellen, welche die Nachteile des Stands der Technik überwindet und eine verlängerte Mischeroffenzeit bei gleichbleibender Topfzeit oder bei gleichzeitiger Verkürzung der Topfzeit aufweist.

Überraschenderweise wurde gefunden, dass zweikomponentige Siliconzusammensetzungen gemäss Anspruch 1 diese Aufgabe lösen.

Durch den für den Fachmann in keiner Weise nahe liegenden Einsatz spezifischer Polydiorganosiloxane zusammen mit dem Katalysator für die Vernetzung von Polydiorganosiloxanen in derselben Komponente, können zweikomponentige Siliconzusammensetzungen zur Verfügung gestellt werden, welche eine Mischeroffenzeit aufweisen, die gleich lang wie die Topfzeit der Zusammensetzung ist, und die zudem eine gute Lagerstabilität aufweisen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine zweikomponentige Siliconzusammensetzung bestehend aus einer Komponente **A** umfassend
i) mindestens ein Hydroxylgruppen terminiertes Polydiorganosiloxan **P;**
ii) mindestens einen Katalysator **K** für die Vernetzung von Polydiorganosiloxanen;
   und einer Komponente **B** umfassend
i') mindestens einen Vernetzer für Polydiorganosiloxane.

Mit "Poly" beginnende Substanznamen wie beispielsweise Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter dem Begriff "Mischeroffenzeit" wird die Offenzeit, also die Verarbeitbarkeitsdauer, einer reaktiven Zusammensetzung innerhalb eines Mischers verstanden. Während dieser Zeit kann das Material im Mischer verbleiben, ohne dass es sich in seinen Verarbeitungseigenschaften wesentlich verändert und ohne dass zur Fortsetzung des Arbeitsvorgangs Spülen oder Produkt-Extrusion erforderlich werden.

Unter dem Begriff "Topfzeit" wird die Verarbeitbarkeitsdauer von reaktiven Zusammensetzungen nach deren Applikation verstanden. Das Ende der Topfzeit ist in den meisten Fällen mit einem derartigen Viskositätsanstieg der Zusammensetzung verbunden, so dass keine zweckmässige Verarbeitung der Zusammensetzung mehr möglich ist.

Die Komponente **A** der zweikomponentigen Siliconzusammensetzung umfasst das Hydroxylgruppen terminierte Polydiorganosiloxan **P,** welches insbesondere ein Polydiorganosiloxan **P'** der Formel (I) ist.

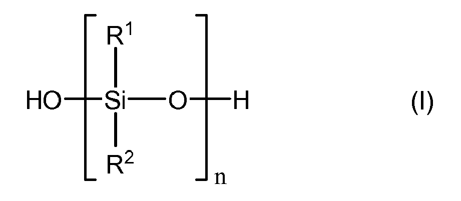

Dabei stehen die Reste R¹ und R² unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen. Insbesondere stehen die Reste R¹ und R² für Alkylreste mit 1 bis 5, insbesondere mit 1 bis 3, C-Atomen, bevorzugt für Methylgruppen.

Der Index n ist so gewählt, dass das Gewichtsmittel des Molekulargewichts M_{w} des Polydiorganosiloxans **P** relativ zu Polystyrol 500 bis 250'000 g/mol beträgt.

Insbesondere ist das Hydroxylgruppen terminierte Polydiorganosiloxan **P'** ein Polydiorganosiloxan **P1** der Formel (I), wobei n so gewählt ist, dass das Gewichtsmittel des Molekulargewichts M_{w} des Polydiorganosiloxans **P1** relativ zu Polystyrol 30'000 bis 80'000 g/mol, insbesondere 40'000 bis 60'000 g/mol, beträgt; oder dass als Polydiorganosiloxan **P'** eine Mischung eingesetzt wird von
i") mindestens einem Hydroxylgruppen terminierten Polydiorganosiloxan **P2** der Formel (I), wobei n so gewählt ist, dass das Gewichtsmittel des Molekulargewichts M_{w} des Polydiorganosiloxans **P2** relativ zu Polystyrol > 80'000 bis 250'000 g/mol, insbesondere 90'000 bis 150'000 g/mol, beträgt; sowie
ii") mindestens einem Hydroxylgruppen terminierten Polydiorganosiloxan **P3** der Formel (I), wobei n so gewählt ist, dass das Gewichtsmittel des Molekulargewichts M_{w} des Polydiorganosiloxans **P3** relativ zu Polystyrol 500 bis ≤ 80'000 g/mol, insbesondere 500 bis 60'000 g/mol, bevorzugt 1'000 bis 30'000 g/mol beträgt.

Hydroxylgruppen terminierte Polydiorganosiloxane, wie sie insbesondere in Formel (I) dargestellt sind, sind bekannt und kommerziell erhältlich. Auch die Herstellung derartiger Polydiorganosiloxane erfolgt in bekannter Art und Weise. Beispielsweise ist sie beschrieben in US 4,962,152, dessen Offenbarung hiermit durch Bezugnahme eingeschlossen ist.
Die vorhergehend beschriebenen Hydroxylgruppen terminierten Polydiorganosiloxane **P** weisen bei 23°C vorzugsweise eine Viskosität zwischen 1 und 500'000 mPa·s, insbesondere zwischen 10 und 250'000 mPa·s, auf.
Weiterhin bevorzugt weist das Polydiorganosiloxan **P1** bei 23°C eine Viskosität zwischen 5'000 und 20'000 mPa·s, insbesondere zwischen 5'000 und 10'000 mPa·s, auf.
Handelt es sich beim Polydiorganosiloxan **P'** um eine Mischung ist von mindestens einem Hydroxylgruppen terminierten Polydiorganosiloxan **P2** und mindestens einem Hydroxylgruppen terminierten Polydiorganosiloxan **P3,** so weist das Polydiorganosiloxan **P2** bei 23°C vorzugsweise eine Viskosität zwischen 10'000 und 500'000 mPa·s, insbesondere zwischen 15'000 und 250'000 mPa·s, auf und das Polydiorganosiloxan **P3** weist bei 23°C vorzugsweise eine Viskosität zwischen 1 und 6'000 mPa·s, insbesondere zwischen 10 und 1'000 mPa·s, bevorzugt zwischen 20 und 500 mPa·s auf. Die angegebenen Viskositäten werden gemessen nach DIN 53018.

Wird als Polydiorganosiloxan **P'** eine Mischung von mindestens einem Polydiorganosiloxan **P2** und mindestens einem Polydiorganosiloxan **P3** eingesetzt, liegt der Gewichtsanteil an Polydiorganosiloxan **P2** in der Regel über dem Gewichtsanteil an Polydiorganosiloxan **P3.** Es ist jedoch zu berücksichtigen, dass die jeweiligen Anteile abhängig sind vom Molekulargewicht der jeweiligen Polydiorganosiloxane.
Zur Veranschaulichung sei hier ein Beispiel angebracht, welches jedoch nicht limitierend für den Gegenstand der Erfindung sein soll. Wird also beispielsweise als Polydiorganosiloxan **P2** ein Polydiorganosiloxan mit einem Molekulargewicht M_{w} im Bereich von 100'000 g/mol und als Polydiorganosiloxan **P3** ein Polydiorganosiloxan mit einem Molekulargewicht M_{w} im Bereich von 5'000 g/mol eingesetzt, so genügt es, **P3** in einer Menge von etwa 0.5 bis 5 Gew.-% bezogen auf **P2** einzusetzen, um den gewünschten Effekt zu erzielen. Wird jedoch bei gleichem **P2** als Polydiorganosiloxan **P3** ein Polydiorganosiloxan mit einem Molekulargewicht M_{w} im Bereich von 50'000 g/mol eingesetzt, so sollte **P3** in einer Menge von etwa 20 bis 40 Gew.-% bezogen auf **P2** eingesetzt werden, um den gewünschten Effekt zu erzielen.

Die Komponente **A** der zweikomponentigen Siliconzusammensetzung umfasst weiterhin mindestens einen Katalysator **K** für die Vernetzung von Polydiorganosiloxanen. Insbesondere handelt es sich beim Katalysator **K** um eine zinnorganische Verbindung oder um ein Titanat.

Bevorzugte zinnorganische Verbindungen sind Dialkylzinnverbindungen wie sie beispielsweise ausgewählt sind aus der Gruppe bestehend aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-butylzinndiacetat, Di-n-octylzinndi-2-ethylhexanoat, Di-n-octylzinndi-2,2-dimethyloctanoat, Di-n-octylzinndimaleinat und Di-n-octylzinndilaurat.
Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe. Bevorzugte Titanate sind beispielsweise Tetrabutyl- oder Tetraisopropyltitanat.
Weiterhin geeignete Titanate weisen mindestens einen mehrzähnigen Liganden, auch Chelatligand genannt, auf. Insbesondere ist der mehrzähnige Ligand ein zweizähniger Ligand.
Geeignete Titanate sind beispielsweise unter den Handelsnamen Tyzor^{®} AA, GBA, GBO, AA-75, AA-65, AA-105, DC, BEAT, IBAY kommerziell erhältlich von der Firma DuPont, USA.

Selbstverständlich ist es möglich oder in gewissen Fällen sogar bevorzugt, Mischungen verschiedener Katalysatoren einzusetzen.

Der Anteil des Katalysators **K** für die Vernetzung von Polydiorganosiloxanen beträgt vorzugsweise 0.001 bis 10 Gew.-%, insbesondere 0.005 bis 4 Gew.-%, bevorzugt 0.01 bis 3 Gew.-%, der gesamten zweikomponentigen Siliconzusammensetzung.

Die Komponente **B** der zweikomponentigen Siliconzusammensetzung umfasst mindestens einen Vernetzer für Polydiorganosiloxane. Insbesondere ist der Vernetzer ein Silan der Formel (II).

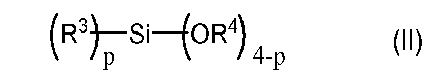

Der Rest R³ steht dabei unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.
Der Rest R⁴ steht unabhängig voneinander für ein Wasserstoffatom, oder für einen Alkylrest mit 1 bis 12 C-Atomen, oder für einen Carbonylrest mit 1 bis 12 C-Atomen, oder für einen Oximrest mit 1 bis 12 C-Atomen. Insbesondere steht der der Rest R⁴ für einen Alkylrest mit 1 bis 5, insbesondere 1 bis 3, C-Atomen, bevorzugt für eine Methyl- oder für eine Ethylgruppe.
Der Index p steht für einen Wert von 0 bis 4, mit der Massgabe, dass falls p für einen Wert von 3 oder 4 steht, mindestens p-2 Reste R³ jeweils mindestens eine mit den Hydroxylgruppen des Polydiorganosiloxans **P** reaktive, insbesondere kondensierbare, Gruppe, also beispielsweise eine Hydroxylgruppe aufweisen. Insbesondere steht p für einen Wert von 0, 1 oder 2, bevorzugt für einen Wert von 0.

Für die Wahl des Silans der Formel (II) als Vernetzer für Polydiorganosiloxane können unterschiedliche Anforderungen an die zweikomponentige Siliconzusammensetzung ausschlaggebend sein. Einerseits spielt die Reaktivität des Silans eine wichtige Rolle, wobei grundsätzlich höherreaktive Silane bevorzugt werden. Aus diesem Grund ist beispielsweise eine Vinylgruppe gegenüber einer Methylgruppe oder eine Methylgruppe gegenüber einer Ethylgruppe als Rest R³ bevorzugt. Andererseits können auch toxikologische Gründe für die Wahl des Vernetzers ausschlaggebend sein. Beispielsweise ist deshalb Tetraethoxysilan als Vernetzer gegenüber Tetramethoxysilan bevorzugt.

Beispiele geeigneter Silane der Formel (II) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan oder Tetra-n-butoxysilan.
Besonders bevorzugt handelt es sich beim Silan der Formel (II) um Vinyltrimethoxysilan oder Tetraethoxysilan oder deren Mischung.

Weiterhin können die Silane auch bereits teilweise (ein Teil aller R⁴ = H) oder vollständig hydrolysiert (alle R⁴ = H) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren kommen kann, welche durch Kondensation von hydrolysierten Silanen gebildet werden. Demnach können als Vernetzer für die zweikomponentige Siliconzusammensetzung auch oligomere Siloxane eingesetzt werden.
Beispielsweise sind geeignete oligomere Siloxane Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Selbstverständlich kann als Vernetzer für die zweikomponentige Siliconzusammensetzung auch eine beliebige Mischung der vorhergehend genannten Silane eingesetzt werden.

Der Anteil des Vernetzers für Polydiorganosiloxane beträgt vorzugsweise 0.1 bis 15 Gew.-%, insbesondere 1 bis 10 Gew.-%, bevorzugt 2 bis 5 Gew.-%, der gesamten zweikomponentigen Siliconzusammensetzung.

Die zweikomponentige Siliconzusammensetzung kann gegebenenfalls noch weitere Bestandteile enthalten.
Derartige zusätzliche Bestandteile sind insbesondere Weichmacher, anorganische und/oder organische Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive.
Beim Einsatz von derartigen optionalen Bestandteilen ist es wichtig darauf zu achten, dass Bestandteile, welche durch Reaktion untereinander oder mit anderen Inhaltsstoffen die Lagerstabilität der Zusammensetzung beeinträchtigen könnten, getrennt voneinander, aufbewahrt werden.

Weiterhin ist es vorteilhaft, alle genannten, in der zweikomponentigen Siliconzusammensetzung gegebenenfalls vorhandenen, Bestandteile so auszuwählen, dass die Lagerstabilität der beiden Komponenten der zweikomponentigen Siliconzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen zweikomponentigen Siliconzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Als Weichmacher sind besonders trialkylsilylterminierte Polydialkylsiloxane geeignet, insbesondere trimethylsilylterminierte Polydimethylsiloxane. Bevorzugt werden trimethylsilylterminierte Polydimethylsiloxane mit Viskositäten zwischen 1 und 10'000 mPa·s. Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Derartige verzweigte Verbindungen entstehen dadurch, dass in den zu ihrer Herstellung dienenden Ausgangsstoffen kleine Mengen tri- oder tetrafunktioneller Silane verwendet werden. Es ist auch möglich anstatt der Polysiloxan-Weichmacher, andere organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Siliconzusammensetzung aufweisen.
Der Anteil des Weichmachers beträgt vorzugsweise 2 bis 15 Gew.-%, insbesondere 5 bis 10 Gew.-%, der gesamten zweikomponentigen Siliconzusammensetzung.

Vorzugsweise weist die Zusammensetzung weiterhin mindestens einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Es können sowohl aktive, als auch passive Füllstoffe in der zweikomponentigen Siliconzusammensetzung eingesetzt werden. Bei aktiven Füllstoffen treten chemische oder physikalische Wechselwirkungen mit dem Polymer auf, bei passiven Füllstoffen treten diese nicht oder nur in untergeordnetem Umfang auf.
Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ ("carbon black"), Aluminiumsilicate, Magnesium-Aluminiumsilicate, Zirkoniumsilicate, Quarzmehl, Christobalitmehl, Diatomeenerde, Glimmer, Eisenoxide, Titanoxide, Zirconiumoxide, Gips, Annalin, Bariumsulfat (BaSO₄, auch Baryt oder Schwerspat genannt), Borcarbid, Bornitrid, Graphit, Kohlefasern, Glasfasern oder Glashohlkugeln, deren Oberfläche gegebenenfalls mit einem Hydrophobierungsmittel behandelt ist. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.
In einer bevorzugten Ausführungsform enthält die Siliconzusammensetzung hochdisperse Kieselsäuren aus Pyrolyseprozessen oder Calciumcarbonate als Füllstoff.

Es ist durchaus möglich und kann sogar von Vorteil sein, eine Mischung verschiedener Füllstoffe einzusetzen.
Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte zweikomponentige Siliconzusammensetzung.

Besonders geeignet als Haftvermittler sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Bei den Alkoxygruppen derartiger Silane handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.
Es ist dem Fachmann klar, dass bei der Verwendung von Silanen als Haftvermittler die Möglichkeit besteht, dass diese je nach Bedingungen, beispielsweise Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane durch Kondensationsreaktionen zur Bildung von oligomeren Siloxanen, insbesondere zu Dimeren und/oder Trimeren kommen kann.

Der Anteil des Haftvermittlers beträgt vorzugsweise 0.1 bis 15 Gew.-%, insbesondere 1 bis 10 Gew.-%, bevorzugt 1 bis 5 Gew.-%, der gesamten zweikomponentigen Siliconzusammensetzung.

Dem Fachmann ist bestens bekannt, dass Bestandteile wie sie insbesondere vorhergehend aufgeführt sind nicht nur eine einzige, ihnen zugeschriebene Funktion oder Wirkung aufweisen können. Vielmehr ist es üblich, dass ein einzelner Bestandteil oder eine einzelne Verbindungen mehrere Funktionen aufweist. So sind beispielsweise manche Haftvermittler auch Vernetzer oder Füllstoffe gleichzeitig auch Rheologiemodifikatoren oder dergleichen.

Die erfindungsgemässe zweikomponentige Siliconzusammensetzung wird typischerweise in einer Verpackung aufbewahrt, welche zwei von einander getrennte Kammern aufweist. Die Komponente **A** ist hierbei in der einen Kammer und die Komponente **B** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **A** und **B** mit Hilfe eines Statikmischers, welcher auf die Verpackung mit zwei Kammern aufgesetzt werden kann.
Solche geeigneten Verpackungen sind beispielsweise beschrieben in US 2006/0155045 A1, WO 2007/096355 A1 und in US 2003/0051610 A1, deren gesamte Offenbarung hiermit durch Bezugnahme eingeschlossen wird.

In einer grosstechnischen Anlage werden die beiden Komponenten **A** und **B** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Insbesondere wird die erfindungsgemässe zweikomponentige Siliconzusammensetzung so eingesetzt, dass das Gewichtsverhältnis der Komponente **A** zu Komponente **B** ≥ 1:1, insbesondere von 3:1 bis 15:1, bevorzugt von 10:1 bis 13:1, beträgt.

Ein Vorteil des Einsatzes der Komponenten **A** und **B** im beschriebenen, bevorzugten Gewichtsverhältnis ist, dass bestehende Anlagen zur Förderung und Applikation von zweikomponentigen Siliconzusammensetzungen in dieser Art und Weise sehr weit verbreitet sind und eine Umrüstung der Anlagen auf die Applikation der Komponenten **A** und **B** im Gewichtsverhältnis von beispielsweise 1:1 auf Verbraucherseite mit hohem Aufwand verbunden wäre.

Weiterhin bevorzugt umfasst die Komponente **B** keine polymerisierbaren Polydiorganosiloxane. Der Vorteil davon ist eine bessere Lagerstabilität der Komponente **B.**

Sowohl Komponente **A** als auch Komponente **B** der vorhergehend beschriebenen zweikomponentigen Siliconzusammensetzung werden unter Ausschluss von Feuchtigkeit hergestellt und aufbewahrt. Getrennt voneinander sind die beiden Komponenten lagerstabil, das heisst, sie können unter Ausschluss von Feuchtigkeit in einer geeigneten Verpackung oder Anordnung, wie sie vorhergehend beschreiben wurde, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Siliconzusammensetzung werden die Komponenten **A** und **B,** beispielsweise durch Rühren, Kneten Walzen oder dergleichen, insbesondere jedoch über einen Statikmischer, miteinander vermischt. Dabei kommen die Hydroxylgruppen des Hydroxylgruppen terminierten Polydiorganosiloxans **P** in Kontakt mit den hydrolysierbaren oder gegebenenfalls mit bereits hydrolysierten Gruppen des Vernetzers, wodurch es zur Aushärtung der Zusammensetzung durch Kondensationsreaktionen kommt. Der Kontakt der Siliconzusammensetzung mit Wasser, insbesondere in Form von Luftfeuchtigkeit, bei der Applikation kann die Vernetzung ebenfalls begünstigen, da durch Reaktion des Wassers mit den hydrolysierbaren Gruppen des Vernetzers Silanolgruppen gebildet werden, deren Reaktivität gegenüber den Hydroxylgruppen des Polydiorganosiloxans **P** erhöht ist. Die Aushärtung der zweikomponentigen Siliconzusammensetzung erfolgt insbesondere bei Raumtemperatur.
Bei der Vernetzung der zweikomponentigen Siliconzusammensetzung entstehen als Reaktionsprodukte der Kondensationsreaktion insbesondere auch Verbindungen der Formel HO-R⁴, wobei R⁴ bereits vorhergehend beschrieben wurde. Bevorzugt handelt es sich bei diesen Nebenprodukten der Kondensationsreaktion um Verbindungen, welche weder die Zusammensetzung noch das Substrat, auf dem die Zusammensetzung appliziert wird beeinträchtigen. Meist bevorzugt handelt es sich beim Reaktionsprodukt der Formel HO-R⁴ um eine Verbindung, welche sich leicht aus der vernetzenden oder der bereits vernetzten Zusammensetzung verflüchtigt.

Weiterhin betrifft die Erfindung eine gehärtete Siliconzusammensetzung wie sie erhältlich ist aus einer vorhergehend beschriebenen zweikomponentigen Siliconzusammensetzung durch Mischen der Komponente **A** mit der Komponente **B.**

Weiterhin betrifft die Erfindung die Verwendung von zweikomponentigen Siliconzusammensetzungen, wie sie vorhergehend beschrieben sind, als Klebstoff, Dichtstoff, als Beschichtung oder als Gussmasse. Bevorzugt wird die erfindungsgemässe Zusammensetzung als Klebstoff verwendet.

Die erfindungsgemässe zweikomponentige Siliconzusammensetzung wird insbesondere verwendet in einem Verfahren des Verklebens zweier Substrate **S1** und **S2** umfassend die Schritte
a) Applikation einer zweikomponentigen Siliconzusammensetzung gemäss vorhergehender Beschreibung auf ein Substrat **S1** und/oder ein Substrat **S2;**
b) Kontaktieren der Substrate **S1** und **S2** über die applizierte Zusammensetzung innerhalb der Offenzeit der Zusammensetzung;
c) Aushärtung der Zusammensetzung durch Reaktion der Komponenten **A** und **B;**
wobei die Substrate **S1** und **S2** gleich oder verschieden voneinander sind.

Bevorzugt wird die erfindungsgemässe Zusammensetzung auch verwendet in einem Verfahren der Abdichtung oder des Beschichtens umfassend die Schritte
a') Applikation einer zweikomponentigen Siliconzusammensetzung gemäss vorhergehender Beschreibung auf ein Substrat **S1** und/oder zwischen zwei Substrate **S1** und **S2;**
b') Aushärtung der Zusammensetzung durch Reaktion der Komponenten **A** und **B;**
   wobei die Substrate **S1** und **S2** gleich oder verschieden voneinander sind.

Es ist dem Fachmann selbstverständlich klar, dass unmittelbar vor oder während der Applikation der zweikomponentigen Zusammensetzung die beiden Komponenten **A** und **B** miteinander vermischt werden müssen.

Die erfindungsgemässe zweikomponentige Siliconzusammensetzung weist bevorzugt eine pastöse Konsistenz mit strukturviskosen Eigenschaften auf. Eine solche Zusammensetzung wird mit einer geeigneten Vorrichtung auf das Substrat aufgetragen, bevorzugt in Form einer Raupe, wobei diese vorteilhaft eine im Wesentlichen runde oder dreieckige Querschnittsfläche aufweist.
Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Als Substrate **S1** und/oder **S2** eignen sich insbesondere Substrate, welche ausgewählt sind aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl-(meth)acrylat, Polyester, Epoxidharz, Farbe und Lack.

Die zweikomponentige Siliconzusammensetzung findet insbesondere in der industriellen Fertigung, insbesondere von Fahrzeugen und Gebrauchsgegenständen des täglichen Gebrauchs, sowie im Bauwesen, insbesondere im Tief- und Hochbau, Anwendung. Bevorzugt wird die zweikomponentige Siliconzusammensetzung im Fensterbau verwendet.

Weiterhin betrifft die Erfindung einen Artikel, welcher eine zumindest teilweise gehärtete Siliconzusammensetzung gemäss vorhergehender Beschreibung aufweist, wobei es sich bei diesem Artikel insbesondere um ein Bauwerk, ein Industriegut oder ein Transportmittel, insbesondere ein Gebäude, oder ein Teil davon handelt.
Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspüler, Waschmaschinen, Backofen, Schienwerfer, Nebelleuchter oder Solarpanels.

Weiterhin betrifft die vorliegende Erfindung ein Verfahren zur Verlängerung der Mischeroffenzeit bei gleichbleibender Topfzeit oder bei gleichzeitiger Verkürzung der Topfzeit von zweikomponentigen Siliconzusammensetzungen, wobei ein Katalysator **K** für die Vernetzung von Polydiorganosiloxanen in der Komponenten **A** zusammen mit mindestens einem Hydroxylgruppen terminierten Polydiorganosiloxan **P** eingesetzt wird.
Durch dieses Verfahren unter Verwendung eines Hydroxylgruppen terminierten Polydiorganosiloxans **P,** wie es vorhergehend beschrieben worden ist, kann verhindert werden, dass es insbesondere beim Eingang der beiden Komponenten **A** und **B** in einen Statikmischer zu einer kurzzeitigen, lokalen Überkonzentration des Katalysators gegenüber dem Polydiorganosiloxan kommt.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Siliconzusammensetzungen

Es wurden die folgenden Zusammensetzungen hergestellt:
Als Komponenten **A** und **B** wurden die in den Tabellen 1 und 2 aufgeführten Bestandteile in den angegebenen Gewichtsprozenten in einem Dissolver bei Raumtemperatur unter Inertatmosphäre miteinander vermischt und eingerührt, bis eine makroskopisch homogene Paste erhalten wurde.
Die hergestellten Komponenten **A** und **B** wurden in die getrennten Kammern von Doppelkartuschen eingefüllt und die Kartuschen wurden verschlossen. Bei der Applikation wurden die Komponenten **A** und **B** mittels Statikmischer vermischt.

### Beschreibung der Prüfmethoden

Die **Viskosität** wurde bestimmt nach DIN 53018.

Die **Lagerstabilität** wurde anhand der Viskosität der jeweiligen Komponente **A** bzw. der Zunahme der Viskosität der Komponente **A** der zweikomponentigen Siliconzusammensetzungen bestimmt. Dabei erfolgte eine erste Messung nach der Herstellung der Komponente **A** und Konditionierung der Zusammensetzung in der Kartusche während eines Tages bei Raumtemperatur ("1d 23 °C"), die zweite Messung nach vier Tagen Lagerung der Kartusche bei einer Temperatur von 70 °C ("4d 70 °C") und die dritte Messung nach sieben Tagen Lagerung der Kartusche bei einer Temperatur von 70 °C ("7d 70 °C"). Erhöht sich die Viskosität nach siebentägiger Lagerung bei 70 °C um weniger als 25 % gegenüber des Anfangswerts ("1d 23 °C"), ist eine Lagerstabilität der untersuchten Komponente **A** von mindestens sechs Monaten bei Raumtemperatur zu erwarten, was den Anforderungen an solche Zusammensetzungen optimal entspricht.

Die **Topfzeit** der Zusammensetzung wurde dadurch gemessen, dass die zuvor in verschlossenen Kartusche während 24 Stunden bei 23 °C konditionierten Komponenten **A** und **B** in einem Gewichtsverhältnis von 13:1 über einen Statikmischer miteinander vermischt wurden. Anschliessend wurde mit einem Holzspatel mindestens einmal pro Minute in der Zusammensetzung gerührt und die Zeit bestimmt, nach welcher die Zusammensetzung beim schnellen Herausziehen des Holzspatels keine langen Fäden (pastöses Verhalten) mehr zieht, sondern bereits nach kurzer Fadenbildung bricht (gummiartiges Verhalten). Diese Zeit wird als Topfzeitende bezeichnet. Wie bei der Viskositätsmessung wurde das Topfzeitende nach Lagerungen bei "1d 23 °C", "4d 70 °C" und "7d 70 °C" gemessen.

Die **Mischeroffenzeit** wurde analog zur Topfzeit gemessen, jedoch wurden die Komponenten **A** und **B** in einem Gewichtsverhältnis von 3:1 miteinander vermischt, um die lokale Überkonzentration der Katalysator enthaltenden Komponente gegenüber der Polydiorganosiloxan enthaltenden Komponente zu simulieren. Die gemessene Zeit bis zum Auftreten gummiartigen Verhaltens wird als Mischeroffenzeitende bezeichnet. Bei der Messung der Mischeroffenzeit ist darauf zu achten, dass der Katalysator immer in einer Menge eingesetzt wird, so dass sich bei einem Mischungsverhältnis **A:B** von 13:1, ein in allen Beispielen identischer Gesamtkatalysatoranteil in der gesamten zweikomponentigen Siliconzusammensetzung ergeben würde. In den Beispielen in Tabelle 2 liegt dieser Gesamtkatalysatoranteil bei 0.028 Gew.-%.

Die **Zugfestigkeit** und die **Bruchdehnung** wurden gemäss DIN 53504 an Filmen mit einer Schichtdicke von 2 mm, welche 7 Tage bei 23 °C, 50 % relativer Luftfeuchtigkeit gelagert wurden, mit einer Messgeschwindigkeit von 200 mm/min auf einer Zugmaschine Zwick/Roell Z005 gemessen. Die angegebenen Werte sind die Mittelwerte von fünf Messungen.

Die **Shore A-Härte** wurde bestimmt nach DIN 53505.

Wie bei der Messung der Viskosität wurden die Zugfestigkeit, die Bruchdehnung und die Shore A-Härte jeweils nach Lagerungen der zweikomponentigen Silikonzusammensetzungen bei "1d 23 °C", "4d 70 °C" und "7d 70 °C" gemessen.

**Tabelle 1 Zweikomponentige Siliconzusammensetzungen und Resultate der Mischung von A:B im Verhältnis von 13:1;**

| | | | ***1*** | ***2*** | ***3*** | ***Ref4*** |
|---|---|---|---|---|---|---|
| **A** | OH-term. PDMS ^{a} (M_{W} = 100'000 g/mol) | | 28.4 | 40.17 | 38.95 | 40.57 |
| | OH-term. PDMS ^{a} (M_{W} = 55'000 g/mol) | | 12.17 | | | |
| | OH-term. PDMS ^{a} (M_{W} = 5'700 g/mol) | | | 0.4 | 1.62 | |
| | Weichmacher | | 7.7 | 7.7 | 7.7 | 7.7 |
| | Haftvermittler | | 1 | 1 | 1 | 1 |
| | Kreide | | 50.7 | 50.7 | 50.7 | 50.7 |
| | Katalysator ^{c} | | 0.03 | 0.03 | 0.03 | 0.03 |
| **B** | Vinyl term. PDMS ^{b} | | 20.2 | 20.2 | 20.2 | 20.2 |
| | Tetraethoxysilan | | 32.3 | 32.3 | 32.3 | 32.3 |
| | Kieselsäure | | 17.2 | 17.2 | 17.2 | 17.2 |
| | Russ | | 20.2 | 20.2 | 20.2 | 20.2 |
| | Haftvermittler | | 10.1 | 10.1 | 10.1 | 10.1 |
| Gesamtanteil [Gew.-%] des Katalysators bei **A:B** = 13:1 | | | 0.028 | 0.028 | 0.028 | 0.028 |
| Viskosität [Pa.s] | | 1d 23 °C | 1069 | 1163 | 660 | 1140 |
| | | 4d 70 °C | 1146 | 1234 | 700 | 1343 |
| | | 7d 70 °C | 1207 | 1425 | 800 | 1673 |
| Viskositätszunahme in % | | | 12 % | 22 % | 21 % | 47 % |
| Topfzeitende [min] | | 1d23°C | 10 | 5 | 9 | 7 |
| | | 4d 70 °C | 6 | 5 | 8 | 4 |
| | | 7d 70 °C | 5 | 5 | 8 | 3 |
| Bruchdehnung [%] | | 1d 23 °C | 164 | 167 | 152 | 168 |
| | | 4d 70 °C | 166 | 175 | 167 | 205 |
| | | 7d 70 °C | 145 | 162 | 193 | 210 |
| Zugfestigkeit [MPa] | | 1d23°C | 2.2 | 2.2 | 2.2 | 1.8 |
| | | 4d 70 °C | 2.2 | 2.1 | 2.1 | 2.1 |
| | | 7d 70 °C | 2.1 | 1.9 | 2.2 | 2.4 |
| Shore A | | 1d 23 °C | 40 | 44 | 44 | 41 |
| | | 4d 70 °C | 40 | 43 | 45 | 40 |
| | | 7d 70 °C | 41 | 40 | 41 | 35 |

| | | | | | | |
|---|---|---|---|---|---|---|
| ^{a} OH-term. PDMS: OH-Gruppen terminiertes Polydimethylsiloxan; ^{b} Vinyl term. PDMS: Vinylgruppen terminiertes Polydimethylsiloxan mit einer Viskosität nach DIN 53018 von 20'000 mPa·s; ^{c} zinnorganische Verbindung. | | | | | | |

**Tabelle 2 Zweikomponentige Siliconzusammensetzungen und Resultate der Messung der Mischeroffenzeit einer Mischung von A:B im Verhältnis von 3:1;**

| | | ***1*** | ***2*** | ***3*** | ***Ref1*** | ***Ref2*** | ***Ref3*** |
|---|---|---|---|---|---|---|---|
| **A** | OH-term. PDMS ^{a} (M_{W} = 100'000 g/mol) | 28.4 | 40.17 | 38.95 | 28.4 | 40.17 | 38.95 |
| | OH-term. PDMS ^{a} (M_{W} = 55'000 g/mol) | 12.17 | | | 12.17 | | |
| | OH-term. PDMS ^{a} (M_{W} = 5'700 g/mol) | | 0.4 | 1.62 | | 0.4 | 1.62 |
| | Weichmacher | 7.7 | 7.7 | 7.7 | 7.7 | 7.7 | 7.7 |
| | Haftvermittler | 1 | 1 | 1 | 1 | 1 | 1 |
| | Kreide | 50.7 | 50.7 | 50.7 | 50.73 | 50.73 | 50.73 |
| | Katalysator ^{c, d} | 0.03 | 0.03 | 0.03 | 0 | 0 | 0 |
| **B** | Vinyl term. PDMS ^{b} | 20.2 | 20.2 | 20.2 | 20.2 | 20.2 | 20.2 |
| | Tetraethoxysilan | 32.3 | 32.3 | 32.3 | 32.3 | 32.3 | 32.3 |
| | Kieselsäure | 17.2 | 17.2 | 17.2 | 17.2 | 17.2 | 17.2 |
| | Russ | 20.2 | 20.2 | 20.2 | 19.81 | 19.81 | 19.81 |
| | Haftvermittler | 10.1 | 10.1 | 10.1 | 10.1 | 10.1 | 10.1 |
| | Katalysator ^{c, d} | 0 | 0 | 0 | 0.39 | 0.39 | 0.39 |
| Gesamtanteil [Gew.-%] des Katalysators bei **A:B** = 13:1 | | 0.028 | 0.028 | 0.028 | 0.028 | 0.028 | 0.028 |
| Gesamtanteil [Gew.-%] des Katalysators bei **A:B** = 3:1 | | 0.0225 | 0.0225 | 0.0225 | 0.1 | 0.1 | 0.1 |
| Mischeroffenzeitende [min] | | 12 | 10 | 13 | < 1 | < 1 | < 1 |

| | | | | | | | |
|---|---|---|---|---|---|---|---|
| ^{a} OH-term. PDMS: OH-Gruppen terminiertes Polydimethylsiloxan; ^{b} Vinyl term. PDMS: Vinylgruppen terminiertes Polydimethylsiloxan mit einer Viskosität nach DIN 53018 von 20'000 mPa·s; ^{c} zinnorganische Verbindung; ^{d} Der Anteil des Katalysators ist jeweils so gewählt, dass ein identischer Gesamtanteil des Katalysators (0.028 Gew.-%, vgl. Tabelle 1) in ***1*** bis ***3*** und in ***Ref1*** bis ***Ref3*** bei einem Verhältnis **A:B** von 13:1 resultieren würde. | | | | | | | |

## Patentansprüche

1. Zweikomponentige Siliconzusammensetzung bestehend aus einer Komponente **A** umfassend
i) mindestens ein Hydroxylgruppen terminiertes Polydiorganosiloxan **P;**
ii) mindestens einen Katalysator **K** für die Vernetzung von Polydiorganosiloxanen;
und einer Komponente **B** umfassend
i') mindestens einen Vernetzer für Polydiorganosiloxane.

2. Zweikomponentige Siliconzusammensetzung gemäss Anspruch 1, **dadurch gekennzeichnet, dass** das Hydroxylgruppen terminierte Polydiorganosiloxan **P** ein Polydiorganosiloxan **P'** der Formel (I) ist 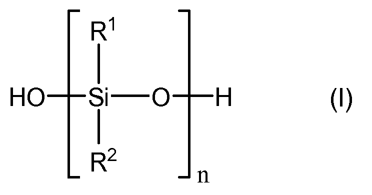 wobei
die Reste R¹ und R² unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen; und
n so gewählt ist, dass das Gewichtsmittel des Molekulargewichts M_{w} des Polydiorganosiloxans **P'** relativ zu Polystyrol 500 bis 250'000 g/mol beträgt.

3. Zweikomponentige Siliconzusammensetzung gemäss Anspruch 2, **dadurch gekennzeichnet, dass** das Hydroxylgruppen terminierte Polydiorganosiloxan **P'**
ein Polydiorganosiloxan **P1** der Formel (I) ist, wobei n so gewählt ist, dass das Gewichtsmittel des Molekulargewichts M_{w} des Polydiorganosiloxans P1 relativ zu Polystyrol 30'000 bis 80'000 g/mol beträgt; oder
dass als Polydiorganosiloxan **P'** eine Mischung eingesetzt wird von
i") mindestens einem Hydroxylgruppen terminierten Polydiorganosiloxan **P2** der Formel (I), wobei n so gewählt ist, dass das Gewichtsmittel des Molekulargewichts M_{w} des Polydiorganosiloxans **P2** relativ zu Polystyrol > 80'000 bis 250'000 g/mol beträgt; sowie
ii") mindestens einem Hydroxylgruppen terminierten Polydiorganosiloxan **P3** der Formel (I), wobei n so gewählt ist, dass das Gewichtsmittel des Molekulargewichts M_{w} des Polydiorganosiloxans **P3** relativ zu Polystyrol 500 bis ≤ 80'000 g/mol, beträgt.

4. Zweikomponentige Siliconzusammensetzung gemäss einem der Ansprüche 2 und 3, **dadurch gekennzeichnet, dass** die Reste R¹ und R² für Alkylreste mit 1 bis 5, insbesondere mit 1 bis 3, C-Atomen, bevorzugt für Methylgruppen, stehen.

5. Zweikomponentige Siliconzusammensetzung gemäss einem der vorhergehenden Ansprüche, **dadurch gekennzeichnet, dass** der Vernetzer für Polydiorganosiloxane ein Silan der Formel (II) ist 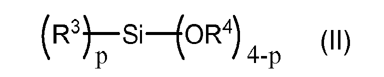 wobei der Rest R³ unabhängig voneinander für einen linearen oder verzweigten, einwertigen Kohlenwasserstoffrest mit 1 bis 12 C-Atomen steht, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist; der Rest R⁴ unabhängig voneinander für ein Wasserstoffatom, oder für einen Alkylrest mit 1 bis 12 C-Atomen, oder für einen Carbonylrest mit 1 bis 12 C-Atomen, oder für einen Oximrest mit 1 bis 12 C-Atomen steht; und p für einen Wert von 0 bis 4 steht, mit der Massgabe, dass falls p für einen Wert von 3 oder 4 steht, mindestens p-2 Reste R³ jeweils mindestens eine mit den Hydroxylgruppen des Polydiorganosiloxans **P** reaktive, insbesondere kondensierbare, Gruppe aufweisen.

6. Zweikomponentige Siliconzusammensetzung gemäss Anspruch 5, **dadurch gekennzeichnet, dass** p für einen Wert von 0 steht.

7. Zweikomponentige Siliconzusammensetzung gemäss einem der Ansprüche 5 und 6, **dadurch gekennzeichnet, dass** der Rest R⁴ für einen Alkylrest mit 1 bis 5, insbesondere 1 bis 3, C-Atomen, bevorzugt für eine Methyl- oder für eine Ethylgruppe steht.

8. Zweikomponentige Siliconzusammensetzung gemäss einem der vorhergehenden Ansprüche, **dadurch gekennzeichnet, dass** das Gewichtsverhältnis von Komponente **A** zu Komponente **B** ≥ 1:1, insbesondere von 3:1 bis 15:1, bevorzugt von 10:1 bis 13:1, beträgt.

9. Zweikomponentige Siliconzusammensetzung gemäss einem der vorhergehenden Ansprüche, **dadurch gekennzeichnet, dass** die Komponente **B** keine polymerisierbaren Polydiorganosiloxane enthält.

10. Zweikomponentige Siliconzusammensetzung gemäss einem der vorhergehenden Ansprüche, **dadurch gekennzeichnet, dass** der Katalysator **K** eine zinnorganische Verbindung oder ein Titanat ist.

11. Zweikomponentige Siliconzusammensetzung gemäss einem der vorhergehenden Ansprüche, **dadurch gekennzeichnet, dass** die Siliconzusammensetzung weiterhin mindestens einen Haftvermittler, insbesondere ein Aminogruppen aufweisendes Organoalkoxysilan, aufweist.

12. Verwendung einer zweikomponentigen Siliconzusammensetzung gemäss einem der Ansprüche 1 bis 11 als Klebstoff, Dichtstoff, Beschichtung oder als Gussmasse.

13. Gehärtete Siliconzusammensetzung, **dadurch gekennzeichnet, dass** sie erhältlich ist aus einer zweikomponentigen Siliconzusammensetzung gemäss einem der Ansprüche 1 bis 11 durch Mischen der Komponente **A** mit der Komponente **B.**

14. Verfahren zur Verlängerung der Mischeroffenzeit bei gleichbleibender Topfzeit oder bei gleichzeitiger Verkürzung der Topfzeit von zweikomponentigen Siliconzusammensetzungen, **dadurch gekennzeichnet, dass** ein Katalysator **K** für die Vernetzung von Polydiorganosiloxanen in der Komponenten **A** zusammen mit mindestens einem Hydroxylgruppen terminierten Polydiorganosiloxan **P** eingesetzt wird.
